# EUROPEAN PATENT SPECIFICATION

(11) **EP 4 266 199 B1**
(45) Date of publication and mention of the grant of the patent: **07.10.2026**
(21) Application number: 23165450.0
(22) Date of filing: 30.03.2023
(51) Int. Cl.: G06F 18/21, G06N 3/00, G06F 18/213, G06N 3/0464

(54) **FEATURE EXTRACTION METHOD AND APPARATUS FOR THREE-DIMENSIONAL FEATURE MAP, STORAGE MEDIUM, AND ELECTRONIC DEVICE**
VERFAHREN UND VORRICHTUNG ZUR MERKMALSEXTRAKTION FÜR DREIDIMENSIONALE MERKMALSKARTE, SPEICHERMEDIUM UND ELEKTRONISCHE VORRICHTUNG
PROCÉDÉ ET APPAREIL D'EXTRACTION DE CARACTÉRISTIQUES POUR CARTE DE CARACTÉRISTIQUES TRIDIMENSIONNELLES, SUPPORT DE STOCKAGE ET DISPOSITIF ÉLECTRONIQUE

(30) Priority: 22.04.2022 CN 202210429575
(43) Date of publication of application: 25.10.2023
(73) Proprietor: Beijing Horizon Robotics Technology Research and Development Co., Ltd., Beijing 100094 (CN)
(72) Inventor: ZHANG, Yinan, Beijing, 100094 (CN); LI, Delin, Beijing, 100094 (CN); LI, Jianjun, Beijing, 100094 (CN)
(74) Representative: Dehns Germany Partnerschaft mbB

(56) References cited:
- CN-A- 111 783 699
- WANG HAI ET AL: "Enhanced Efficiency 3D Convolution Based on Optimal FPGA Accelerator", IEEE ACCESS, vol. 5, 7 June 2017 (2017-06-07), pages 6909 - 6916, XP011651485, DOI: 10.1109/ACCESS.2017.2699229
- KUNLUN BAI: "A Comprehensive Introduction to Different Types of Convolutions in Deep Learning | by Kunlun Bai | Towards Data Science", 11 February 2019 (2019-02-11), XP055735555, Retrieved from the Internet <URL:https://towardsdatascience.com/a-comprehensive-introduction-to-different-types-of-convolutions-in-deep-learning-669281e58215> [retrieved on 20200930]
- BURLACU ALEX: "Speeding up Convolutional Neural Networks", TOWARDSDATASCIENCE.COM, 2 May 2018 (2018-05-02), Internet, pages 1 - 15, XP093076489, Retrieved from the Internet <URL:https://towardsdatascience.com/speeding-up-convolutional-neural-networks-240beac5e30f> [retrieved on 20230828]

## Description

### FIELD OF THE INVENTION

The present invention relates to a feature extraction method and apparatus for a three-dimensional feature map, a storage medium, and an electronic device.

### BACKGROUND OF THE INVENTION

With increasing demand for 3D models in fields such as automatic driving, it becomes imperative that three-dimensional convolution processing is supported. However, most of existing hardware components support only two-dimensional convolution processing; and development of hardware lags behind evolution of algorithms. Therefore, a hardware component in a conventional technology usually cannot support three-dimensional convolution processing. Wang Hai et al: "Enhanced Efficiency 3D Convolution Based on Optimal FPGA Accelerator", IEEE ACCESS, vol. 5, 7 June 2027, pages 6909-6916, XP011651485, recites that the 3D convolution captures both spatial and temporal information using a 3D convolution kernel sliding along M, N, and S axes; in 3D convolution, for given S input feature maps with the size of MxN, the pixel cubes are extracted from the input feature maps and then convolute with the 3D convolution kernel. The 3D convolution operation may be represented as the summation of Rx2D convolution operations. Kunlun Bai: "A Comprehensive Introduction to Different Types of Convolutions in Deep Learning", Towards Data Science, 11 February 2019, XP055735555, recites that in 3D convolution, a 3D filter can move in all 3-direction (height, width, channel of the image). At each position, the element-wise multiplication and addition provide one number. Since the 3D filter slides through a 3D space, the output numbers are arranged in a 3D space and the output is in the form of 3D data.

### SUMMARY OF THE INVENTION

To resolve the foregoing technical problem, the present invention according to the independent claims is proposed. Embodiments of the present invention provide a feature extraction method and apparatus for a three-dimensional feature map, a storage medium, and an electronic device.

According to an aspect of the present invention, a feature extraction method for a three-dimensional feature map is provided, including:
determining an overlay parameter based on depth information of a three-dimensional feature map to be processed;
decomposing the three-dimensional feature map into a plurality of target two-dimensional feature maps based on the depth information and the overlay parameter;
performing two-dimensional convolution processing on each of the plurality of target two-dimensional feature maps to obtain a plurality of initial feature maps; and
determining a target feature map corresponding to the three-dimensional feature map based on the plurality of initial feature maps.

According to another aspect of the present invention, a feature extraction apparatus for a three-dimensional feature map is provided, including:
a parameter determination module, configured to determine an overlay parameter based on depth information of a three-dimensional feature map to be processed;
a feature map decomposition module, configured to decompose the three-dimensional feature map into a plurality of target two-dimensional feature maps based on the depth information and the overlay parameter determined by the parameter determination module;
a convolution processing module, configured to perform two-dimensional convolution processing on each of the plurality of target two-dimensional feature maps obtained from the feature map decomposition module to obtain a plurality of initial feature maps; and
a feature determination module, configured to determine a target feature map corresponding to the three-dimensional feature map based on the plurality of initial feature maps obtained from the convolution processing module.

According to still another aspect of the present invention, a computer readable storage medium is provided, in which a computer program is stored, and the computer program is used for implementing the feature extraction method for a three-dimensional feature map described in any one of the foregoing embodiments.

According to yet another aspect of the present invention, an electronic device is provided, where the electronic device includes:
a processor; and
a memory, configured to store a processor-executable instruction, where
the processor is configured to read the executable instruction from the memory, and execute the instruction to implement the feature extraction method for a three-dimensional feature map described in any one of the foregoing embodiments.

Based on the feature extraction method and apparatus for a three-dimensional feature map, the storage medium, and the electronic device that are provided in the foregoing embodiments of the present invention, the three-dimensional feature map to be processed is decomposed into a plurality of target two-dimensional feature maps based on the depth information and the overlay parameter, so that a hardware device supporting two-dimensional convolution processing may process the target two-dimensional feature map; and the target feature map corresponding to the three-dimensional feature map to be processed is determined based on the initial feature map obtained by processing the target two-dimensional feature map. In other words, three-dimensional convolution processing on the three-dimensional feature map is implemented by the two-dimensional convolution processing. Because implementation of a processing process depends on only the two-dimensional convolution processing, the three-dimensional convolution processing on the three-dimensional feature map may be implemented while a hardware supporting the two-dimensional convolution processing is implemented, without changing a configuration of the hardware.

### BRIEF DESCRIPTION OF THE DRAWINGS

By describing the embodiments of the present invention in more detail with reference to the accompanying drawings, the foregoing and other objectives, features, and advantages of the present invention will become more apparent. The accompanying drawings are provided for further understanding of the embodiments of the present invention, constituting a part of the specification, and are used to explain the present invention together with the embodiments of the present invention, without limitation to the present invention. In the accompanying drawings, same reference numerals generally represent same components or steps.
FIG. 1 is a schematic diagram of mapping from Conv3d to Conv2d according to an exemplary embodiment of the present invention;
FIG. 2 is a schematic flowchart of a feature extraction method for a three-dimensional feature map according to an exemplary embodiment of the present invention;
FIG. 3 is a schematic flowchart of step 202 in the embodiment shown in FIG. 2 of the present invention;
FIG. 4a is a schematic flowchart of step 204 in the embodiment shown in FIG. 2 of the present invention;
FIG. 4b is a schematic flowchart of step 2042 in the embodiment shown in FIG. 4a of the present invention;
FIG. 5 is a schematic flowchart of step 206 in the embodiment shown in FIG. 2 of the present invention;
FIG. 6 is a schematic flowchart of step 208 in the embodiment shown in FIG. 2 of the present invention;
FIG. 7 is a schematic structural diagram of a feature extraction apparatus for a three-dimensional feature map according to an exemplary embodiment of the present invention;
FIG. 8 is a schematic structural diagram of a feature extraction apparatus for a three-dimensional feature map according to another exemplary embodiment of the present invention; and
FIG. 9 is a structural diagram of an electronic device according to an exemplary embodiment of the present invention.

### DETAILED DESCRIPTION OF THE EMBODIMENTS

Exemplary embodiments of the present invention are described below in detail with reference to the accompanying drawings. Obviously, the described embodiments are merely a part, rather than all, of embodiments of the present invention. It should be understood that the present invention is not limited by the exemplary embodiments described herein.

It should be noted that the scope of the present invention is not limited by relative arrangement, numeric expressions, and numerical values of components and steps described in these embodiments, unless otherwise specified.

A person skilled in the art may understand that terms such as "first" and "second" in the embodiments of the present invention are merely used for distinguishing among different steps, devices, modules or the like, and indicate neither any particular technical meaning, nor necessarily logical ordering among them.

It should be further understood that, in the embodiments of the present invention, the term "multiple"/"a plurality of" may refer to two or more; and the term "at least one" may refer to one, two, or more.

It should be further understood that, any component, data, or structure involved in the embodiments of the present invention may be generally construed to one or more, unless clearly stated or the context indicates otherwise.

In addition, the term "and/or" in the present disclosure refers to only an association relationship that describes associated objects, indicating presence of three relationships. For example, A and/or B may indicate presence of three cases: A alone, both A and B, and B alone. In addition, the character "/" in the present disclosure generally indicates an "or" relationship of associated objects.

The embodiments of the present invention may be applicable to a terminal device, a computer system, a server, and other electronic devices, which may be operated together with numerous other general-purpose or special-purpose computing system environments or configurations. These electronic devices may be described in general context of a computer system-executable instruction (such as a program module) executed by the computer system. Generally, the program module may include a routine, a program, a target program, a component, logic, a data structure, and the like that execute particular tasks or implement particular abstract data types. The computer system/server may be implemented in a distributed cloud computing environment. In the distributed cloud computing environment, a task is performed by a remote processing device linked through a communications network. In the distributed cloud computing environment, the program module may be located on a storage medium of a local or remote computing system including a storage device.

### Application overview

In a process of implementing the present invention, the inventor finds that a hardware device provided in a conventional technology may support only two-dimensional convolution processing, and cannot support three-dimensional convolution processing.

A pseudocode for convolution processing of a 3D convolution (conv3d) network is offered as follows:

```
 // conv3d
 for (co)
    for (h, h += kh)
        for (w, w += kw)
            for (d, d += kd)
                for (kh)
                    for (kw)
                        for (kd)
                            for (ci)
```

It may be learned from the pseudocode that, a calculation process of 3D convolution includes 8 layers of loops: Loop at an outermost layer includes calculating and outputting Cout iteration; loop at inner 2-4^{th} layers includes performing an addition operation on dimensions of h (height, representing a height of a feature map), w (width, representing a width of the feature map), and d (a depth, representing a depth of the feature map, that is, an added dimension of a 3D feature map relative to a 2D feature map); loop at further inner 5-7^{th} layers includes sliding of a kernel (a convolution kernel for an convolution operation, where sliding is performed on the feature map by using the convolution kernel as an unit to perform a multiply-add operation) required for an output point on an input, where kernel sizes in the three directions of h, w, and d need to be accumulated, represented as kh, kw, and kd; and loop at an innermost layer includes accumulation in a direction of an input channel (channel, as a dimension common to 2D convolution and 3D convolution, where no sliding but only accumulation is performed on this dimension).

In general, the loops at the four outer layers include traversing of a 4-dimensional output point (without considering a batch), and the loops at the four inner layers include traversing multiply-accumulate data required for one output point.

3D convolution (conv3d) differs from 2D convolution (conv2d) in that: not only sliding in the directions of h and w included in conv2d is performed, but also sliding in the direction of d is performed; and the kernel is four-dimensional, where sliding is performed in all of the directions of h, w, and d.

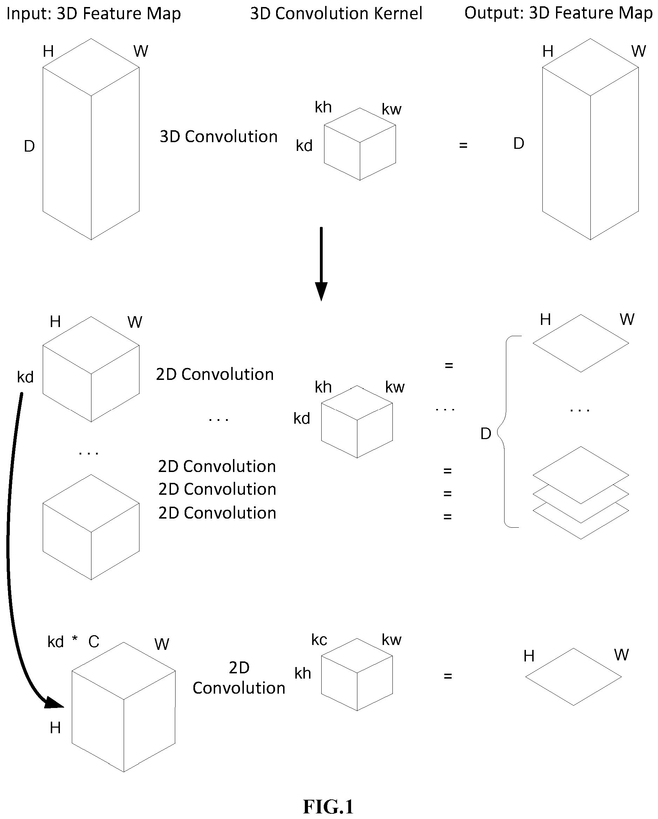

FIG. 1 is a schematic diagram of mapping from Conv3d to Conv2d according to an exemplary embodiment of the present invention. As shown in FIG. 1, according to this embodiment of the present invention, the loop in the d dimension in the 3D convolution is arranged at the outermost layer, 3D convolution processing of a 3D feature map (feature) is split into being for (d/kd) number of separate conv2d, where the 3D feature map is split in a D direction. A convolution kernel for each calculation in the 2D convolution is still a size of a 3D convolution kernel (kh * kw * kd), but a C size of a convolution kernel in the 2D convolution is kd * C (in other words, in this embodiment of the present invention, accumulation of kd is implemented by overlaying in a C direction, so as to arrange the loop in the d dimension at the outermost layer). In addition, a result of each calculation of 2D convolution is a feature map (H * W) of a point output in the D direction. A 3D feature map corresponding to the 3D convolution may be obtained by overlaying the feature map output by each 2D convolution in the D direction.

A calculation process of splitting conv3d into conv2d may be implemented through the following pseudocode:

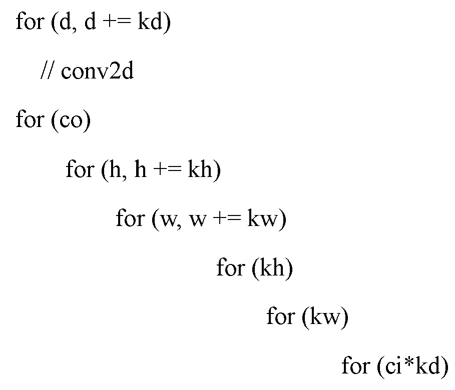

Compared with conv2d, there is additionally d-dimensional data in conv3d. Therefore, converting conv3d into conv2d is to extract calculation for the d-dimensional data, including accumulation of d-dimensional data at an output point and a kernel d (kd) at input. Herein, traversal of the d-dimensional data is arranged at the outermost layer for calculation, and accumulation on the kernel d is overlaid in a direction of the input channel. In this pseudocode, except for the d dimension at the outermost layer, the loop at the innermost layer is a conv2d. The conv2d includes input of a feature shape of h * w * (ci * kd), and a weight shape of kh * kw * (ci * kd) for a convolution kernel, and thereby a 3d convolution operation may be performed by cycling conv2d for d/kd times.

### Exemplary method

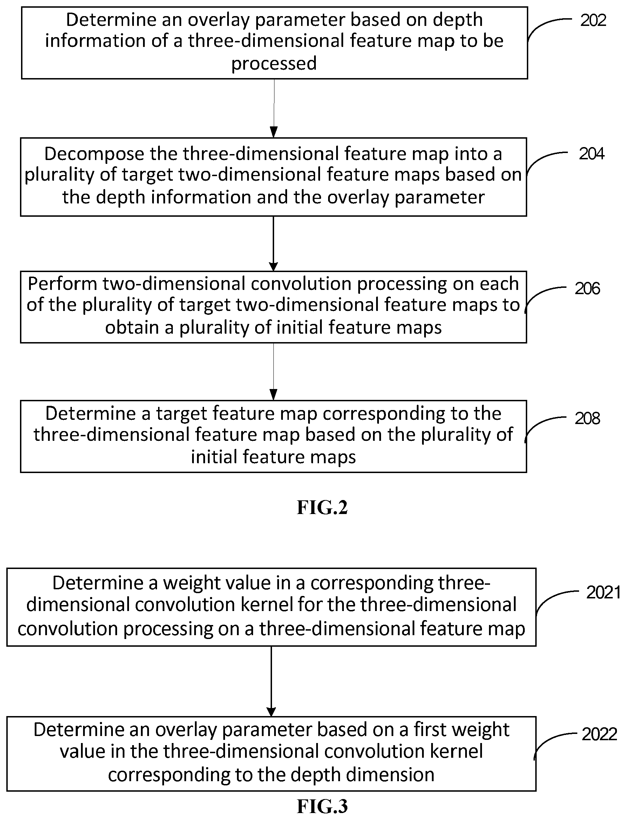

FIG. 2 is a schematic flowchart of a feature extraction method for a three-dimensional feature map according to an exemplary embodiment of the present invention. This embodiment may be applied to an electronic device. As shown in FIG. 2, the method includes the following steps.

Step 202. Determine an overlay parameter based on depth information of a three-dimensional feature map to be processed.

A three-dimensional feature map includes depth information that is not included in a two-dimensional feature map. For example, the depth information of the three-dimensional feature map may be represented by d. The overlay parameter may indicate a size, in a depth direction, of a convolution kernel for 3d convolution, for example, kd provided in the embodiment described above.

Step 204. Decompose the three-dimensional feature map into a plurality of target two-dimensional feature maps based on the depth information and the overlay parameter.

In this embodiment, the three-dimensional feature map is decomposed in the depth direction to obtain the plurality of target two-dimensional feature maps. In this case, a convolution operation may be performed on each of the target two-dimensional feature maps through 2d convolution.

Step 206. Perform two-dimensional convolution processing on each of the plurality of target two-dimensional feature maps to obtain a plurality of initial feature maps.

Each of the target two-dimensional features map corresponds to one of the initial feature maps.

Each of the target two-dimensional feature maps obtained by decomposing the three-dimensional feature map is a two-dimensional feature map. In this case, a calculation may be performed on the two-dimensional feature map directly through conv2d, to obtain the initial feature map corresponding to each of the target two-dimensional feature maps.

Step 208. Determine a target feature map corresponding to the three-dimensional feature map based on the plurality of initial feature maps.

In this embodiment, because each of the plurality of initial feature maps does not include the depth information of the three-dimensional feature map in the depth direction, in order to obtain the target feature map corresponding to the three-dimensional feature map, operations such as overlaying may be performed on the plurality of initial feature maps to obtain the target feature map.

According to the feature extraction method for a three-dimensional feature map provided in the foregoing embodiment of the present invention, the three-dimensional feature map to be processed is decomposed into a plurality of target two-dimensional feature maps based on the depth information and the overlay parameter, so that a hardware device supporting two-dimensional convolution processing may process the target two-dimensional feature map; and the target feature map corresponding to the three-dimensional feature map to be processed is determined based on the initial feature map obtained by processing the target two-dimensional feature map. In other words, three-dimensional convolution processing on the three-dimensional feature map is implemented by the two-dimensional convolution processing. Because implementation of a processing process depends on only the two-dimensional convolution processing, the three-dimensional convolution processing on the three-dimensional feature map may be implemented while a hardware supporting the two-dimensional convolution processing is implemented, without changing a configuration of the hardware.

As shown in FIG. 3, on the basis of the embodiment shown in FIG. 2, step 202 may include the following steps.

Step 2021. Determine a weight value in a corresponding three-dimensional convolution kernel when a three-dimensional convolution processing is performed on the three-dimensional feature map.

When the three-dimensional feature map is processed by using a prior three-dimensional convolution network, the convolution kernel is a three-dimensional convolution kernel, wherein the three-dimensional evolution kernel includes information about a depth dimension that is not included in the two-dimensional evolution processing. In this embodiment, in order to decompose the three-dimensional feature map into two-dimensional feature maps that may be processed by a two-dimensional convolution network, reference may be made to the three-dimensional convolution kernel to determine how to decompose the three-dimensional feature map.

Step 2022. Determine the overlay parameter based on a first weight value in the three-dimensional convolution kernel corresponding to the depth dimension.

According to the invention, the first weight value is taken as the overlay parameter.

In this embodiment, different dimensions in the three-dimensional convolution kernel correspond to different dimensions in the three-dimensional feature map. That is, the depth dimension in the three-dimensional convolution kernel corresponds to the depth information in the three-dimensional feature map. Therefore, in order to decompose the depth information in the three-dimensional feature map, the first weight value corresponding to the depth dimension in the three-dimensional convolution kernel may be taken as the overlay parameter. The three-dimensional feature map may be decomposed in the depth dimension based on the overlay parameter and the depth information in the three-dimensional feature map, so that the decomposed feature map may be processed through two-dimensional convolution, thereby improving decomposition efficiency of the three-dimensional feature map.

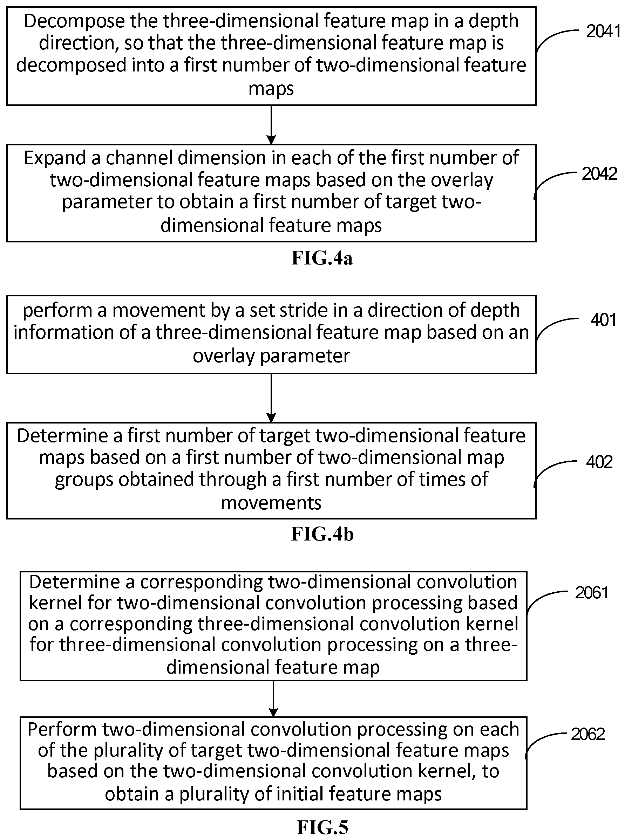

As shown in FIG. 4a, on the basis of the embodiment shown in FIG. 2, step 204 may include the following steps.

Step 2041. Decompose the three-dimensional feature map in a depth direction, so that the three-dimensional feature map is decomposed into a first number of two-dimensional feature maps.

The first number is an integer greater than 1.

According to the invention, the first number is determined based on the depth information of the three-dimensional feature map and the overlay parameter, namely as an integer obtained by dividing the depth information by the overlay parameter.

Step 2042. Expand a channel dimension in each of the first number of two-dimensional feature maps based on the overlay parameter to obtain the first number of target two-dimensional feature maps.

In this embodiment, the three-dimensional feature map is split in the depth direction, for example, the three-dimensional feature map is split into d/kd number of separate two-dimensional feature maps; whereas it is a convolution operation that is performed in the depth direction for the three-dimensional convolution processing, and thus compensation needs to be performed by an accumulation of the overlay parameter in other directions other than the depth direction. In this embodiment, the accumulation of the overlay parameter is performed by the overlaying in the channel dimension (for example, the c direction), or an accumulation of the kernel is separately performed one time so as to compensate for a calculation difference caused by splitting the depth information, so that information about the convolution processing of the depth information in a part of the three-dimensional feature maps may be included in each of the obtained target two-dimensional feature maps, so as to reach an aim that the target feature map corresponding to the three-dimensional feature map is obtained by overlaying the first number of target two dimensional feature maps.

As shown in FIG. 4b, on the basis of the embodiment shown in FIG. 4a as above, step 2042 may include the following steps.

Step 401. Performing a movement by a set stride in a direction of the depth information of the three-dimensional feature map based on the overlay parameter.

Optionally, the set stride is a distance for which the overlay parameter moves in a direction of the depth information, and a value of the set stride may be set according to an actual scenario. For example, the three-dimensional feature map has dimensions of 1×111×111×111 (a dimension of the depth information) ×64 as an example, wherein the three-dimensional convolution kernel has a dimension of 3×3×3, padding has a dimension of 1×1×1, a stride of the three-dimensional convolution has a dimension of 1×1×1, and 111 conv2d may be obtained after split. In this example, the value of the set stride is 1.

Step 402. Determine the first number of target two-dimensional feature maps based on a first number of two-dimensional map groups obtained through a first number of times of movements.

In this embodiment, each of the two-dimensional map groups may be taken as a target two-dimensional feature map. By performing the movement in the direction of the depth information based on the set stride, one two-dimensional map group may be obtained through each movement. A specific process of obtaining the target two-dimensional feature map may include:
obtaining, based on each of the first number of times of movements, a two-dimensional feature map group including a second number of two-dimensional feature maps, the second number indicating a number of the overlay parameters; and
determining each of the two-dimensional feature map groups as a feature map on one channel in the target two-dimensional feature map, to obtain the first number of target two-dimensional feature maps with the second number of channels.

In this embodiment, the two-dimensional feature map group after depth information is split is obtained by each movement. In order to reduce an amount of information lost in a splitting process of the depth information, an overlay operation is performed in a channel direction by using the overlay parameter in this embodiment. For example, if the number of channels in the three-dimensional feature map is 64 (for example, the dimension of the three-dimensional feature map is 1×111×111×111×64), the overlay parameter is 3, and the number of channels in the target two-dimensional feature map obtained after split is 3×64, a dimension of the two-dimensional feature map required for calculation at a first point in the depth dimension is 1×111×111× (2×64). In this embodiment, expression of the depth information in the three-dimensional feature map by the target two-dimensional feature map is improved by performing an overlay in the channel dimension, thereby improving accuracy of the target feature map obtained based on the target two-dimensional feature map.

As shown in FIG. 5, on the basis of the embodiment shown in FIG. 2, step 206 may include the following steps.

Step 2061. Determine a corresponding two-dimensional convolution kernel for the two-dimensional convolution processing based on a corresponding three-dimensional convolution kernel for the three-dimensional convolution processing on the three-dimensional feature map.

Optionally, the two-dimensional convolution kernel obtained based on the three-dimensional convolution kernel may be obtained directly by eliminating the depth dimension or by complementing in another dimension on the basis of eliminating the depth dimension.

Step 2062. Perform two-dimensional convolution processing on each of the plurality of target two-dimensional feature maps based on the two-dimensional convolution kernel, to obtain a plurality of initial feature maps.

In this embodiment, a process of a convolution calculation is performed by using the two-dimensional convolution kernel. Because both an object of the convolution calculation (the target two-dimensional feature map) and the convolution kernel are two-dimensional, the calculation process is the same as a common two-dimensional convolution calculation process. A plurality of initial feature maps may be obtained by respectively performing the two-dimensional convolution processing on each of the target two-dimensional feature maps. The target feature map is determined based on the plurality of initial feature maps. In other words, it may be achieved that three-dimensional convolution processing is performed on the three-dimensional feature map through a two-dimensional convolution operation. In this case, feature extraction of the three-dimensional feature map may be achieved merely by using hardware capable of supporting the two-dimensional convolution calculation, without processing the hardware.

Optionally, step 2061 may include the following steps.

a1. Merge a first value of the corresponding depth dimension in the three-dimensional convolution kernel and a second value of a corresponding channel dimension in the three-dimensional convolution kernel, to obtain a third value.

The third value may be equal to a product obtained by multiplying the first value by the second value.

a2. Determine the third value as a value of a corresponding channel dimension in the two-dimensional convolution kernel to obtain the two-dimensional convolution kernel with a reduced number of dimensions.

In this embodiment, in the process of decomposing the three-dimensional feature map into a plurality of target two-dimensional feature maps, because overlaying is performed in the channel dimension of the target two-dimensional feature map, overlaying is also performed in the channel dimension in the corresponding convolution kernel, that is, the product of the first value and the second value is used as the value of the channel dimension in the two-dimensional convolution kernel, so that the dimensions of the two-dimensional convolution kernel correspond to those of the target two-dimensional feature map, thereby further facilitating the convolution calculation of the target two-dimensional feature map.

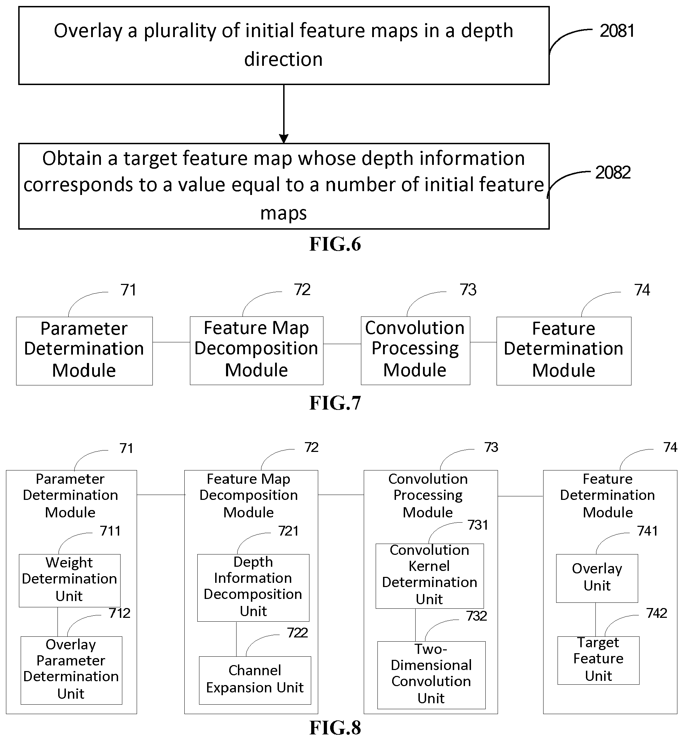

As shown in FIG. 6, on the basis of the embodiment shown in FIG. 2, step 208 may include the following steps.

Step 2081. Overlay the plurality of initial feature maps in the depth direction.

Step 2082. Obtain the target feature map whose depth information corresponds to a value equal to the number of the initial feature maps.

In this embodiment, the plurality of initial feature maps are overlaid in the depth direction of the feature map. By overlaying in the depth direction, it is achieved that the output target feature map may reflect the depth information. In other words, a result of the three-dimensional feature map through the three-dimensional convolution processing is restored, thereby achieving a technical effect of obtaining the result of the three-dimensional convolution processing based on the two-dimensional convolution calculation.

Any feature extraction method provided in the embodiments of the present invention may be implemented by any suitable device with a data processing capability, including but not limited to a terminal device and a server. Alternatively, any feature extraction method for a three-dimensional feature map provided in the embodiments of the present invention may be implemented by a processor. For example, the processor implements any feature extraction method for a three-dimensional feature map described in the embodiments of the present invention by invoking a corresponding instruction stored in a memory. Details are not described below again.

### Exemplary device

FIG. 7 is a schematic structural diagram of a feature extraction apparatus for a three-dimensional feature map according to an exemplary embodiment of the present invention. As shown in FIG. 7, the apparatus provided in this embodiment includes:
a parameter determination module 71, configured to determine an overlay parameter based on depth information of a three-dimensional feature map to be processed;
a feature map decomposition module 72, configured to decompose the three-dimensional feature map into a plurality of target two-dimensional feature maps based on the depth information and the overlay parameter determined by the parameter determination module 71;
a convolution processing module 73, configured to perform two-dimensional convolution processing on each of the plurality of target two-dimensional feature maps obtained from the feature map decomposition module 72, to obtain a plurality of initial feature maps; and
a feature determination module 74, configured to determine a target feature map corresponding to the three-dimensional feature map based on the plurality of initial feature maps obtained from the convolution processing module 73.

According to the feature extraction apparatus for a three-dimensional feature map provided in the foregoing embodiment of the present invention, the three-dimensional feature map to be processed is decomposed into a plurality of target two-dimensional feature maps based on the depth information and the overlay parameter, so that a hardware device supporting two-dimensional convolution processing may process the target two-dimensional feature map; and the target feature map corresponding to the three-dimensional feature map to be processed is determined based on the initial feature map obtained by processing the target two-dimensional feature map. In other words, three-dimensional convolution processing on the three-dimensional feature map is implemented by the two-dimensional convolution processing. Because implementation of a processing process depends on only the two-dimensional convolution processing, the three-dimensional convolution processing on the three-dimensional feature map may be implemented while a hardware supporting the two-dimensional convolution processing is implemented, without changing a configuration of the hardware.

FIG. 8 is a schematic structural diagram of a feature extraction apparatus according to another exemplary embodiment of the present invention. As shown in FIG. 8, in the apparatus provided in this embodiment, the parameter determination module 71 includes:
a weight determination unit 711, configured to determine a weight value in a corresponding three-dimensional convolution kernel for the three-dimensional convolution processing on the three-dimensional feature map; and
an overlay parameter determination unit 712, configured to determine the overlay parameter based on a first weight value in the three-dimensional convolution kernel corresponding to the depth dimension.

In some optional embodiments, the feature map decomposition module 72 includes:
a depth information decomposition unit 721, configured to decompose the three-dimensional feature map in a depth direction, so that the three-dimensional feature map is decomposed into a first number of two-dimensional feature maps, where
the first number is an integer greater than 1; and
a channel expansion unit 722, configured to expand a channel dimension in each of the first number of two-dimensional feature maps based on the overlay parameter to obtain the first number of target two-dimensional feature maps.

Optionally, the depth information decomposition unit 721 is specifically configured to perform a movement by a set stride in a direction of the depth information of the three-dimensional feature map based on the overlay parameter; and determine the first number of target two-dimensional feature maps based on the first number of two-dimensional map groups obtained through the first number of times of movements.

Optionally, the depth information decomposition unit 721 is further configured to obtain, based on each of the first number of times of movements, a two-dimensional feature map groups including a second number of two-dimensional feature maps, the second number indicating a number of the overlay parameters; and determine each of the two-dimensional feature map groups as a feature map on one channel in the target two-dimensional feature map, to obtain the first number of target two-dimensional feature maps with the second number of channels.

In some optional embodiments, the convolution processing module 73 includes:
a convolution kernel determination unit 731, configured to determine a corresponding two-dimensional convolution kernel for the two-dimensional convolution processing based on a corresponding three-dimensional convolution kernel for the three-dimensional convolution processing on the three-dimensional feature map; and
a two-dimensional convolution unit 732, configured to perform two-dimensional convolution processing on each of the plurality of target two-dimensional feature maps based on the two-dimensional convolution kernel, to obtain a plurality of initial feature maps.

Optionally, the convolution kernel determination unit 731 is specifically configured to merge a first value of the corresponding depth dimension in the three-dimensional convolution kernel and a second value of a corresponding channel dimension in the three-dimensional convolution kernel, to obtain a third value; and determine the third value as a value of a corresponding channel dimension in the two-dimensional convolution kernel to obtain the two-dimensional convolution kernel with a reduced number of dimensions.

In some optional embodiments, the feature determination module 74 includes:
an overlay unit 741, configured to overlay the plurality of initial feature maps in the depth direction; and
a target feature unit 742, configured to obtain the target feature map whose depth information corresponds to a value equal to the number of the initial feature maps.

### Exemplary electronic device

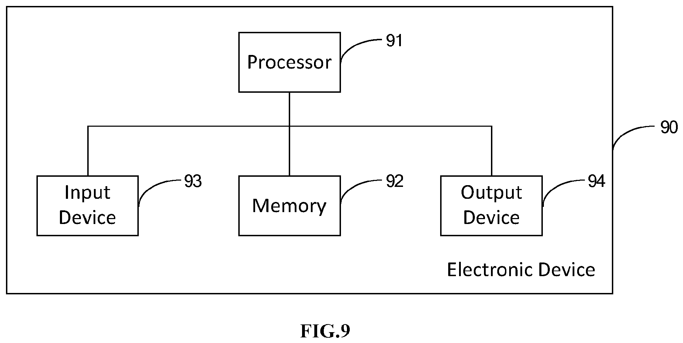

An electronic device according to an embodiment of the present invention is described below with reference to FIG. 9. The electronic device may be any one or two of a first device 100 and a second device 200, or a stand-alone device separated from the first device and the second device. The stand-alone device may communicate with the first device and the second device, to receive an obtained input signal therefrom.

FIG. 9 shows a block diagram of an electronic device according to an embodiment of the present invention.

As shown in FIG. 9, an electronic device 90 includes one or more processors 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the program instruction to implement the feature extraction method for a three-dimensional feature map according to various embodiments of the present invention that are described above and/or other desired functions. Various contents such as an input signal, a signal component, and a noise component may also be stored in the computer readable storage medium.

In an example, the electronic device 90 may further include an input device 93 and an output device 94. These components are connected to each other through a bus system and/or another form of connection mechanism (not shown).

For example, when the electronic device is the first device 100 or the second device 200, the input device 93 may be a microphone or a microphone array, which is configured to capture an input signal of a sound source. When the electronic device is a stand-alone device, the input device 93 may be a communication network connector for receiving the collected input signal from the first device 100 and the second device 200.

In addition, the input device 93 may further include, for example, a keyboard and a mouse.

The output device 94 may output various information to the outside, including determined distance information, direction information, and the like. The output device 94 may include, for example, a display, a loudspeaker, a printer, a communication network, and a remote output device connected to the communication network.

Certainly, for simplicity, FIG. 9 shows only some of components in the electronic device 90 that are related to the present invention, and components such as a bus and an input/output interface are omitted. In addition, according to specific application situations, the electronic device 90 may further include any other appropriate components.

### Exemplary computer program product and computer readable storage medium

In addition to the foregoing method and devices, the embodiments of the present invention may also relate to a computer program product, which includes computer program instructions. When the computer program instructions are run by a processor, the processor is enabled to perform the steps, of the feature extraction method for a three-dimensional feature map according to the embodiments of the present invention, that are described in the "exemplary method" part of this specification.

The computer program product may be program code, written with one or any combination of a plurality of programming languages, that is configured to perform the operations in the embodiments of the present invention. The programming languages include an object-oriented programming language such as Java or C++, and further include a conventional procedural programming language such as a "C" language or a similar programming language. The program code may be entirely or partially executed on a user computing device, executed as a separate software package, partially executed on the user computing device and partially executed on a remote computing device, or entirely executed on the remote computing device or a server.

In addition, the embodiments of the present invention may further relate to a computer readable storage medium, which stores a computer program instruction. When the computer program instruction is run by the processor, the processor is enabled to perform the steps, of the feature extraction method for a three-dimensional feature map according to the embodiments of the present invention, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present invention are described above in combination with specific embodiments. However, it should be pointed out that the advantages, superiorities, and effects mentioned in the present invention are merely examples but are not for limitation, and it cannot be considered that these advantages, superiorities, and effects are necessary for each embodiment of the present invention. In addition, specific details described above are merely for examples and for ease of understanding, rather than limitations. The details described above do not limit that the present invention must be implemented by using the foregoing specific details.

The block diagrams of the equipment, the apparatus, the device, and the system involved in the present invention are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and may be used interchangeably with "including but not limited to". It should be further pointed out that, various components or various steps in the apparatus, the device, and the method of the present invention may be disassembled and/or recombined. These disassembling and/or recombinations shall be regarded as equivalent solutions of the present invention.

## Claims

1. A computer-implemented feature extraction method for a three-dimensional feature map, the method being **characterized by** including:
determining an overlay parameter based on depth information of a three-dimensional feature map to be processed, wherein the overlay parameter indicates a size, in a depth direction, of a convolution kernel for three-dimensional convolution, and the depth information of the three-dimensional feature map is represented by a depth of the three-dimensional feature map;
decomposing the three-dimensional feature map into a plurality of target two-dimensional feature maps based on the depth information and the overlay parameter;
performing two-dimensional convolution processing on each of the plurality of target two-dimensional feature maps to obtain a plurality of initial feature maps; and
determining a target feature map corresponding to the three-dimensional feature map based on the plurality of initial feature maps,
wherein a first weight value in the three-dimensional convolution kernel corresponding to the depth dimension is taken as the overlay parameter,
wherein the decomposing the three-dimensional feature map into a plurality of target two-dimensional feature maps based on the depth information and the overlay parameter includes:
decomposing the three-dimensional feature map in a depth direction, so that the three-dimensional feature map is decomposed into a first number of two-dimensional feature maps, wherein the first number is an integer greater than 1 and is obtained by dividing the depth information by the overlay parameter; and
expanding a channel dimension in each of the first number of two-dimensional feature maps based on the overlay parameter to obtain the first number of target two-dimensional feature maps,
wherein the performing two-dimensional convolution processing on each of the plurality of target two-dimensional feature maps to obtain a plurality of initial feature maps includes:
determining a corresponding two-dimensional convolution kernel for the two-dimensional convolution processing based on a corresponding three-dimensional convolution kernel for the three-dimensional convolution processing on the three-dimensional feature map; and
performing, based on the two-dimensional convolution kernel, two-dimensional convolution processing on each of the plurality of target two-dimensional feature maps to obtain the plurality of initial feature maps,
wherein the determining a target feature map corresponding to the three-dimensional feature map based on the plurality of initial feature maps includes:
overlaying the plurality of initial feature maps in the depth direction; and
obtaining the target feature map whose depth information corresponds to a value equal to the number of the initial feature maps.

2. The method according to claim 1, wherein the expanding a channel dimension in each of the first number of two-dimensional feature maps based on the overlay parameter to obtain the first number of target two-dimensional feature maps includes:
performing a movement by a set stride in a direction of the depth information of the three-dimensional feature map based on the overlay parameter; and
determining the first number of target two-dimensional feature maps based on a first number of two-dimensional map groups obtained through a first number of times of movements.

3. The method according to claim 2, wherein the determining the first number of target two-dimensional feature maps based on a first number of two-dimensional map groups obtained through a first number of times of movements includes:
obtaining, based on each of the first number of times of movements, a two-dimensional feature map group including a second number of two-dimensional feature maps, the second number indicating a number of the overlay parameters; and
determining each of the two-dimensional feature map groups as a feature map on one channel in the target two-dimensional feature map, to obtain the first number of target two-dimensional feature maps with the second number of channels.

4. The method according to any one of claims 1 to 3, wherein the determining a corresponding two-dimensional convolution kernel for the two-dimensional convolution processing based on a corresponding three-dimensional convolution kernel for the three-dimensional convolution processing on the three-dimensional feature map includes:
merging a first value of the corresponding depth dimension in the three-dimensional convolution kernel and a second value of a corresponding channel dimension in the three-dimensional convolution kernel, to obtain a third value; and
determining the third value as a value of a corresponding channel dimension in the two-dimensional convolution kernel to obtain the two-dimensional convolution kernel with a reduced number of dimensions.

5. A computer-implemented feature extraction apparatus for a three-dimensional feature map, the apparatus including:
a parameter determination module, configured to determine an overlay parameter based on depth information of a three-dimensional feature map to be processed, wherein the overlay parameter indicates a size, in a depth direction, of a convolution kernel for three-dimensional convolution, and the depth information of the three-dimensional feature map is represented by a depth of the three-dimensional feature map;
a feature map decomposition module, configured to decompose the three-dimensional feature map into a plurality of target two-dimensional feature maps based on the depth information and the overlay parameter determined by the parameter determination module;
a convolution processing module, configured to perform two-dimensional convolution processing on each of the plurality of target two-dimensional feature maps obtained from the feature map decomposition module to obtain a plurality of initial feature maps; and
a feature determination module, configured to determine a target feature map corresponding to the three-dimensional feature map based on the plurality of initial feature maps obtained from the convolution processing module,
wherein a first weight value in the three-dimensional convolution kernel corresponding to the depth dimension is taken as the overlay parameter,
wherein the feature map decomposition module includes:
a depth information decomposition unit, configured to decompose the three-dimensional feature map in a depth direction, so that the three-dimensional feature map is decomposed into a first number of two-dimensional feature maps, wherein the first number is an integer greater than 1 and is obtained by dividing the depth information by the overlay parameter; and
a channel expansion unit, configured to expand a channel dimension in each of the first number of two-dimensional feature maps based on the overlay parameter to obtain the first number of target two-dimensional feature maps,
wherein the convolution processing module includes:
a convolution kernel determination unit, configured to determine a corresponding two-dimensional convolution kernel for the two-dimensional convolution processing based on a corresponding three-dimensional convolution kernel for the three-dimensional convolution processing on the three-dimensional feature map; and
a two-dimensional convolution unit, configured to perform two-dimensional convolution processing on each of the plurality of target two-dimensional feature maps based on the two-dimensional convolution kernel, to obtain a plurality of initial feature maps,
wherein the feature determination module includes:
an overlay unit, configured to overlay the plurality of initial feature maps in the depth direction; and
a target feature unit, configured to obtain the target feature map whose depth information corresponds to a value equal to the number of the initial feature maps.

6. The apparatus according to claim 5, wherein the parameter determination module includes:
a weight determination unit, configured to determine a weight value in a corresponding three-dimensional convolution kernel for the three-dimensional convolution processing on the three-dimensional feature map; and
an overlay parameter determination unit, configured to determine the overlay parameter based on the first weight value in the three-dimensional convolution kernel corresponding to the depth dimension.

7. A computer readable storage medium, in which a computer program is stored, the computer readable storage medium being **characterized by** that the computer program is used for implementing the feature extraction method for a three-dimensional feature map according to any one of claims 1 to 4.

8. An electronic device, including:
a processor; and
a memory, configured to store a processor-executable instruction,
the electronic device being **characterized by** that the processor is configured to read the executable instruction from the memory, and execute the instruction to implement the feature extraction method for a three-dimensional feature map according to any one of claims 1 to 4.

## Patentansprüche

1. Computerimplementiertes Merkmalsextraktionsverfahren für eine dreidimensionale Merkmalskarte, wobei das Verfahren **dadurch gekennzeichnet ist, dass** es umfasst:
Bestimmen eines Überlagerungsparameters basierend auf Tiefeninformationen einer zu verarbeitenden dreidimensionalen Merkmalskarte, wobei der Überlagerungsparameter eine Größe eines Faltungskerns für eine dreidimensionale Faltung in einer Tiefenrichtung angibt und die Tiefeninformationen der dreidimensionalen Merkmalskarte durch eine Tiefe der dreidimensionalen Merkmalskarte dargestellt werden;
Zerlegen der dreidimensionalen Merkmalskarte in eine Vielzahl von Ziel-Zweidimensionalen Merkmalskarten basierend auf den Tiefeninformationen und dem Überlagerungsparameter;
Durchführen einer zweidimensionalen Faltungsverarbeitung an jeder der Vielzahl von Ziel-Zweidimensionalen Merkmalskarten, um eine Vielzahl von anfänglichen Merkmalskarten zu erhalten; und
Bestimmen einer Ziel-Merkmalskarte, die der dreidimensionalen Merkmalskarte entspricht, basierend auf der Vielzahl von anfänglichen Merkmalskarten,
wobei ein erster Gewichtswert im dreidimensionalen Faltungskern, der der Tiefendimension entspricht, als der Überlagerungsparameter verwendet wird,
wobei das Zerlegen der dreidimensionalen Merkmalskarte in eine Vielzahl von Ziel-Zweidimensionalen Merkmalskarten basierend auf den Tiefeninformationen und dem Überlagerungsparameter umfasst:
Zerlegen der dreidimensionalen Merkmalskarte in einer Tiefenrichtung, sodass die dreidimensionale Merkmalskarte in eine erste Anzahl von zweidimensionalen Merkmalskarten zerlegt wird, wobei die erste Anzahl eine ganze Zahl größer als 1 ist und durch Teilen der Tiefeninformationen durch den Überlagerungsparameter erhalten wird; und
Erweitern einer Kanaldimension in jeder der ersten Anzahl von zweidimensionalen Merkmalskarten basierend auf dem Überlagerungsparameter, um die erste Anzahl von Ziel-Zweidimensionalen Merkmalskarten zu erhalten,
wobei das Durchführen der zweidimensionalen Faltungsverarbeitung an jeder der Vielzahl von Ziel-Zweidimensionalen Merkmalskarten, um eine Vielzahl von anfänglichen Merkmalskarten zu erhalten, umfasst:
Bestimmen eines entsprechenden zweidimensionalen Faltungskerns für die zweidimensionale Faltungsverarbeitung basierend auf einem entsprechenden dreidimensionalen Faltungskern für die dreidimensionale Faltungsverarbeitung der dreidimensionalen Merkmalskarte; und
Durchführen der zweidimensionalen Faltungsverarbeitung an jeder der Vielzahl von Ziel-Zweidimensionalen Merkmalskarten basierend auf dem zweidimensionalen Faltungskern, um die Vielzahl von anfänglichen Merkmalskarten zu erhalten,
wobei das Bestimmen einer Ziel-Merkmalskarte, die der dreidimensionalen Merkmalskarte entspricht, basierend auf der Vielzahl von anfänglichen Merkmalskarten umfasst:
Überlagern der Vielzahl von anfänglichen Merkmalskarten in der Tiefenrichtung; und
Erhalten der Ziel-Merkmalskarte, deren Tiefeninformationen einem Wert entsprechen, der gleich der Anzahl der anfänglichen Merkmalskarten ist.

2. Verfahren nach Anspruch 1, wobei das Erweitern einer Kanaldimension in jeder der ersten Anzahl von zweidimensionalen Merkmalskarten basierend auf dem Überlagerungsparameter, um die erste Anzahl von Ziel-Zweidimensionalen Merkmalskarten zu erhalten, umfasst:
Durchführen einer Bewegung mit einem festgelegten Schritt in einer Richtung der Tiefeninformationen der dreidimensionalen Merkmalskarte basierend auf dem Überlagerungsparameter; und
Bestimmen der ersten Anzahl von Ziel-Zweidimensionalen Merkmalskarten basierend auf einer ersten Anzahl von Gruppen von zweidimensionalen Karten, die durch eine erste Anzahl von Bewegungen erhalten werden.

3. Verfahren nach Anspruch 2, wobei das Bestimmen der ersten Anzahl von Ziel-Zweidimensionalen Merkmalskarten basierend auf einer ersten Anzahl von Gruppen von zweidimensionalen Karten, die durch eine erste Anzahl von Bewegungen erhalten werden, umfasst:
Erhalten, basierend auf jeder der ersten Anzahl von Bewegungen, einer Gruppe von zweidimensionalen Merkmalskarten, die eine zweite Anzahl von zweidimensionalen Merkmalskarten umfasst, wobei die zweite Anzahl eine Anzahl der Überlagerungsparameter angibt; und
Bestimmen jeder der Gruppen von zweidimensionalen Merkmalskarten als eine Merkmalskarte auf einem Kanal in der Ziel-Zweidimensionalen Merkmalskarte, um die erste Anzahl von Ziel-Zweidimensionalen Merkmalskarten mit der zweiten Anzahl von Kanälen zu erhalten.

4. Verfahren nach einem der Ansprüche 1 bis 3, wobei das Bestimmen eines entsprechenden zweidimensionalen Faltungskerns für die zweidimensionale Faltungsverarbeitung basierend auf einem entsprechenden dreidimensionalen Faltungskern für die dreidimensionale Faltungsverarbeitung der dreidimensionalen Merkmalskarte umfasst:
Zusammenführen eines ersten Werts der entsprechenden Tiefendimension im dreidimensionalen Faltungskern und eines zweiten Werts einer entsprechenden Kanaldimension im dreidimensionalen Faltungskern, um einen dritten Wert zu erhalten; und
Bestimmen des dritten Werts als einen Wert einer entsprechenden Kanaldimension im zweidimensionalen Faltungskern, um den zweidimensionalen Faltungskern mit einer reduzierten Anzahl von Dimensionen zu erhalten.

5. Computerimplementierte Merkmalsextraktionsvorrichtung für eine dreidimensionale Merkmalskarte, wobei die Vorrichtung umfasst:
ein Parameterbestimmungsmodul, das konfiguriert ist, um einen Überlagerungsparameter basierend auf Tiefeninformationen einer zu verarbeitenden dreidimensionalen Merkmalskarte zu bestimmen, wobei der Überlagerungsparameter eine Größe eines Faltungskerns für eine dreidimensionale Faltung in einer Tiefenrichtung angibt und die Tiefeninformationen der dreidimensionalen Merkmalskarte durch eine Tiefe der dreidimensionalen Merkmalskarte dargestellt werden;
ein Merkmalskartenzerlegungsmodul, das konfiguriert ist, um die dreidimensionale Merkmalskarte in eine Vielzahl von Ziel-Zweidimensionalen Merkmalskarten basierend auf den Tiefeninformationen und dem durch das Parameterbestimmungsmodul bestimmten Überlagerungsparameter zu zerlegen;
ein Faltungsverarbeitungsmodul, das konfiguriert ist, um eine zweidimensionale Faltungsverarbeitung an jeder der Vielzahl von Ziel-Zweidimensionalen Merkmalskarten durchzuführen, die vom Merkmalskartenzerlegungsmodul erhalten wurden, um eine Vielzahl von anfänglichen Merkmalskarten zu erhalten; und
ein Merkmalsbestimmungsmodul, das konfiguriert ist, um eine Ziel-Merkmalskarte zu bestimmen, die der dreidimensionalen Merkmalskarte entspricht, basierend auf der Vielzahl von anfänglichen Merkmalskarten, die vom Faltungsverarbeitungsmodul erhalten wurden,
wobei ein erster Gewichtswert im dreidimensionalen Faltungskern, der der Tiefendimension entspricht, als der Überlagerungsparameter verwendet wird, wobei das Merkmalskartenzerlegungsmodul umfasst:
eine Tiefeninformationszerlegungseinheit, die konfiguriert ist, um die dreidimensionale Merkmalskarte in einer Tiefenrichtung zu zerlegen, sodass die dreidimensionale Merkmalskarte in eine erste Anzahl von zweidimensionalen Merkmalskarten zerlegt wird, wobei die erste Anzahl eine ganze Zahl größer als 1 ist und durch Teilen der Tiefeninformationen durch den Überlagerungsparameter erhalten wird; und
eine Kanalerweiterungseinheit, die konfiguriert ist, um eine Kanaldimension in jeder der ersten Anzahl von zweidimensionalen Merkmalskarten basierend auf dem Überlagerungsparameter zu erweitern, um die erste Anzahl von Ziel-Zweidimensionalen Merkmalskarten zu erhalten,
wobei das Faltungsverarbeitungsmodul umfasst:
eine Faltungskernbestimmungseinheit, die konfiguriert ist, um einen entsprechenden zweidimensionalen Faltungskern für die zweidimensionale Faltungsverarbeitung basierend auf einem entsprechenden dreidimensionalen Faltungskern für die dreidimensionale Faltungsverarbeitung der dreidimensionalen Merkmalskarte zu bestimmen; und
eine zweidimensionale Faltungseinheit, die konfiguriert ist, um eine zweidimensionale Faltungsverarbeitung an jeder der Vielzahl von Ziel-Zweidimensionalen Merkmalskarten basierend auf dem zweidimensionalen Faltungskern durchzuführen,
um die Vielzahl von anfänglichen Merkmalskarten zu erhalten,
wobei das Merkmalsbestimmungsmodul umfasst:
eine Überlagerungseinheit, die konfiguriert ist, um die Vielzahl von anfänglichen Merkmalskarten in der Tiefenrichtung zu überlagern; und
eine Ziel-Merkmalseinheit, die konfiguriert ist, um die Ziel-Merkmalskarte zu erhalten, deren Tiefeninformationen einem Wert entsprechen, der gleich der Anzahl der anfänglichen Merkmalskarten ist.

6. Vorrichtung nach Anspruch 5, wobei das Parameterbestimmungsmodul umfasst:
eine Gewichtsbestimmungseinheit, die konfiguriert ist, um einen Gewichtswert in einem entsprechenden dreidimensionalen Faltungskern für die dreidimensionale Faltungsverarbeitung der dreidimensionalen Merkmalskarte zu bestimmen; und
eine Überlagerungsparameterbestimmungseinheit, die konfiguriert ist, um den Überlagerungsparameter basierend auf dem ersten Gewichtswert im dreidimensionalen Faltungskern, der der Tiefendimension entspricht, zu bestimmen.

7. Computerlesbares Speichermedium, in dem ein Computerprogramm gespeichert ist, **dadurch gekennzeichnet, dass** das Computerprogramm zur Implementierung des Merkmalsextraktionsverfahrens für eine dreidimensionale Merkmalskarte nach einem der Ansprüche 1 bis 4 verwendet wird.

8. Elektronische Vorrichtung, umfassend:
einen Prozessor; und
einen Speicher, der konfiguriert ist, um eine vom Prozessor ausführbare Anweisung zu speichern,
wobei die elektronische Vorrichtung **dadurch gekennzeichnet ist, dass** der Prozessor konfiguriert ist, um die ausführbare Anweisung aus dem Speicher zu lesen und die Anweisung auszuführen, um das Merkmalsextraktionsverfahren für eine dreidimensionale Merkmalskarte nach einem der Ansprüche 1 bis 4 zu implementieren.

## Revendications

1. Procédé d'extraction de caractéristiques mis en œuvre par ordinateur pour une carte de caractéristiques tridimensionnelle, le procédé étant **caractérisé en ce qu'**il comprend :
la détermination d'un paramètre de superposition basé sur des informations de profondeur d'une carte de caractéristiques tridimensionnelle à traiter, le paramètre de superposition indiquant une taille, dans une direction de profondeur, d'un noyau de convolution pour une convolution tridimensionnelle, et les informations de profondeur de la carte de caractéristiques tridimensionnelle étant représentées par une profondeur de la carte de caractéristiques tridimensionnelle ;
la décomposition de la carte de caractéristiques tridimensionnelle en une pluralité de cartes de caractéristiques bidimensionnelles cibles basées sur les informations de profondeur et le paramètre de superposition ;
la réalisation d'un traitement de convolution bidimensionnelle sur chacune de la pluralité de cartes de caractéristiques bidimensionnelles cibles pour obtenir une pluralité de cartes de caractéristiques initiales ; et
la détermination d'une carte de caractéristiques cible correspondant à la carte de caractéristiques tridimensionnelle basée sur la pluralité de cartes de caractéristiques initiales,
où une première valeur de poids dans le noyau de convolution tridimensionnelle correspondant à la dimension de profondeur est prise comme le paramètre de superposition,
où la décomposition de la carte de caractéristiques tridimensionnelle en une pluralité de cartes de caractéristiques bidimensionnelles cibles basées sur les informations de profondeur et le paramètre de superposition comprend :
la décomposition de la carte de caractéristiques tridimensionnelle dans une direction de profondeur, de sorte que la carte de caractéristiques tridimensionnelle soit décomposée en un premier nombre de cartes de caractéristiques bidimensionnelles, le premier nombre étant un entier supérieur à 1 et étant obtenu en divisant les informations de profondeur par le paramètre de superposition ; et
l'expansion d'une dimension de canal dans chacune du premier nombre de cartes de caractéristiques bidimensionnelles basées sur le paramètre de superposition pour obtenir le premier nombre de cartes de caractéristiques bidimensionnelles cibles, où la réalisation d'un traitement de convolution bidimensionnelle sur chacune de la pluralité de cartes de caractéristiques bidimensionnelles cibles pour obtenir une pluralité de cartes de caractéristiques initiales comprend :
la détermination d'un noyau de convolution bidimensionnelle correspondant pour le traitement de convolution bidimensionnelle basé sur un noyau de convolution tridimensionnelle correspondant pour le traitement de convolution tridimensionnelle sur la carte de caractéristiques tridimensionnelle ; et
la réalisation, sur la base du noyau de convolution bidimensionnelle, d'un traitement de convolution bidimensionnelle sur chacune de la pluralité de cartes de caractéristiques bidimensionnelles cibles pour obtenir la pluralité de cartes de caractéristiques initiales,
où la détermination d'une carte de caractéristiques cible correspondant à la carte de caractéristiques tridimensionnelle basée sur la pluralité de cartes de caractéristiques initiales comprend :
la superposition de la pluralité de cartes de caractéristiques initiales dans la direction de profondeur ; et
l'obtention de la carte de caractéristiques cible dont les informations de profondeur correspondent à une valeur égale au nombre de cartes de caractéristiques initiales.

2. Procédé selon la revendication 1, où l'expansion d'une dimension de canal dans chacune du premier nombre de cartes de caractéristiques bidimensionnelles basées sur le paramètre de superposition pour obtenir le premier nombre de cartes de caractéristiques bidimensionnelles cibles comprend :
la réalisation d'un déplacement d'une foulée définie dans une direction des informations de profondeur de la carte de caractéristiques tridimensionnelle basée sur le paramètre de superposition ; et
la détermination du premier nombre de cartes de caractéristiques bidimensionnelles cibles basée sur un premier nombre de groupes de cartes bidimensionnelles obtenus par un premier nombre de déplacements.

3. Procédé selon la revendication 2, où la détermination du premier nombre de cartes de caractéristiques bidimensionnelles cibles basée sur un premier nombre de groupes de cartes bidimensionnelles obtenus par un premier nombre de déplacements comprend :
l'obtention, sur la base de chacun du premier nombre de déplacements, d'un groupe de cartes de caractéristiques bidimensionnelles comprenant un deuxième nombre de cartes de caractéristiques bidimensionnelles, le deuxième nombre indiquant un nombre de paramètres de superposition ; et
la détermination de chacun des groupes de cartes de caractéristiques bidimensionnelles comme une carte de caractéristiques sur un canal dans la carte de caractéristiques bidimensionnelle cible, pour obtenir le premier nombre de cartes de caractéristiques bidimensionnelles cibles avec le deuxième nombre de canaux.

4. Procédé selon l'une quelconque des revendications 1 à 3, où la détermination d'un noyau de convolution bidimensionnelle correspondant pour le traitement de convolution bidimensionnelle basé sur un noyau de convolution tridimensionnelle correspondant pour le traitement de convolution tridimensionnelle sur la carte de caractéristiques tridimensionnelle comprend :
la fusion d'une première valeur de la dimension de profondeur correspondante dans le noyau de convolution tridimensionnelle et d'une deuxième valeur d'une dimension de canal correspondante dans le noyau de convolution tridimensionnelle, pour obtenir une troisième valeur ; et
la détermination de la troisième valeur comme une valeur d'une dimension de canal correspondante dans le noyau de convolution bidimensionnelle pour obtenir le noyau de convolution bidimensionnelle avec un nombre réduit de dimensions.

5. Appareil d'extraction de caractéristiques mis en œuvre par ordinateur pour une carte de caractéristiques tridimensionnelle, l'appareil comprenant :
un module de détermination de paramètre, configuré pour déterminer un paramètre de superposition basé sur des informations de profondeur d'une carte de caractéristiques tridimensionnelle à traiter, le paramètre de superposition indiquant une taille, dans une direction de profondeur, d'un noyau de convolution pour une convolution tridimensionnelle, et les informations de profondeur de la carte de caractéristiques tridimensionnelle étant représentées par une profondeur de la carte de caractéristiques tridimensionnelle ;
un module de décomposition de carte de caractéristiques, configuré pour décomposer la carte de caractéristiques tridimensionnelle en une pluralité de cartes de caractéristiques bidimensionnelles cibles basées sur les informations de profondeur et le paramètre de superposition déterminé par le module de détermination de paramètre ;
un module de traitement de convolution, configuré pour réaliser un traitement de convolution bidimensionnelle sur chacune de la pluralité de cartes de caractéristiques bidimensionnelles cibles obtenues à partir du module de décomposition de carte de caractéristiques pour obtenir une pluralité de cartes de caractéristiques initiales ; et
un module de détermination de caractéristiques, configuré pour déterminer une carte de caractéristiques cible correspondant à la carte de caractéristiques tridimensionnelle basée sur la pluralité de cartes de caractéristiques initiales obtenues à partir du module de traitement de convolution,
où une première valeur de poids dans le noyau de convolution tridimensionnelle correspondant à la dimension de profondeur est prise comme le paramètre de superposition,
où le module de décomposition de carte de caractéristiques comprend :
une unité de décomposition d'informations de profondeur, configurée pour décomposer la carte de caractéristiques tridimensionnelle dans une direction de profondeur, de sorte que la carte de caractéristiques tridimensionnelle soit décomposée en un premier nombre de cartes de caractéristiques bidimensionnelles, le premier nombre étant un entier supérieur à 1 et étant obtenu en divisant les informations de profondeur par le paramètre de superposition ; et
une unité d'expansion de canal, configurée pour étendre une dimension de canal dans chacune du premier nombre de cartes de caractéristiques bidimensionnelles basées sur le paramètre de superposition pour obtenir le premier nombre de cartes de caractéristiques bidimensionnelles cibles,
où le module de traitement de convolution comprend :
une unité de détermination de noyau de convolution, configurée pour déterminer un noyau de convolution bidimensionnelle correspondant pour le traitement de convolution bidimensionnelle basé sur un noyau de convolution tridimensionnelle correspondant pour le traitement de convolution tridimensionnelle sur la carte de caractéristiques tridimensionnelle ; et
une unité de convolution bidimensionnelle, configurée pour réaliser un traitement de convolution bidimensionnelle sur chacune de la pluralité de cartes de caractéristiques bidimensionnelles cibles basées sur le noyau de convolution bidimensionnelle, pour obtenir une pluralité de cartes de caractéristiques initiales,
où le module de détermination de caractéristiques comprend :
une unité de superposition, configurée pour superposer la pluralité de cartes de caractéristiques initiales dans la direction de profondeur ; et
une unité de caractéristiques cible, configurée pour obtenir la carte de caractéristiques cible dont les informations de profondeur correspondent à une valeur égale au nombre de cartes de caractéristiques initiales.

6. Appareil selon la revendication 5, où le module de détermination de paramètre comprend :
une unité de détermination de poids, configurée pour déterminer une valeur de poids dans un noyau de convolution tridimensionnelle correspondant pour le traitement de convolution tridimensionnelle sur la carte de caractéristiques tridimensionnelle ; et
une unité de détermination de paramètre de superposition, configurée pour déterminer le paramètre de superposition basé sur la première valeur de poids dans le noyau de convolution tridimensionnelle correspondant à la dimension de profondeur.

7. Support de stockage lisible par ordinateur, dans lequel un programme informatique est stocké, **caractérisé en ce que** le programme informatique est utilisé pour mettre en œuvre le procédé d'extraction de caractéristiques pour une carte de caractéristiques tridimensionnelle selon l'une quelconque des revendications 1 à 4.

8. Dispositif électronique, comprenant :
un processeur ; et
une mémoire, configurée pour stocker une instruction exécutable par le processeur,
le dispositif électronique étant **caractérisé en ce que** le processeur est configuré pour lire l'instruction exécutable à partir de la mémoire et exécuter l'instruction pour mettre en œuvre le procédé d'extraction de caractéristiques pour une carte de caractéristiques tridimensionnelle selon l'une quelconque des revendications 1 à 4.
